# EUROPÄISCHE PATENTSCHRIFT

(11) **EP 2 057 296 B1**
(45) Veröffentlichungstag und Bekanntmachung des Hinweises auf die Patenterteilung: **06.03.2013**
(21) Anmeldenummer: 07784635.0
(22) Anmeldetag: 28.08.2007
(51) Int. Cl.: C22C 9/02, C22C 9/04, F16C 33/12

(54) **GLEITLAGER**
PLAIN BEARING
PALIER COULISSANT

(30) Priorität: 01.09.2006 AT 14562006
(43) Veröffentlichungstag der Anmeldung: 13.05.2009
(73) Patentinhaber: Miba Gleitlager GmbH, 4663 Laakirchen (AT)
(72) Erfinder: MERGEN, Robert, A-4813 Altmünster (AT)
(74) Vertreter: Hübscher, Helmut
(86) Internationale Anmeldenummer: PCT/AT2007/000410
(87) Internationale Veröffentlichungsnummer: WO 2008/025046

(56) Entgegenhaltungen:
- EP-A- 1 698 707
- WO-A-03/031102
- DE-B3- 10 308 779
- FR-A- 2 793 810

## Beschreibung

### Technisches Gebiet

Die Erfindung bezieht sich auf ein Gleitlager mit einer stählernen Stützschale und mit einer auf die Stützschale aufgebrachten, bleifreien Lagermetallschicht auf Kupferbasis mit den Hauptlegierungselementen Zinn und Zink.

### Stand der Technik

Gleitlagerwerkstoffe auf Kupferbasis mit Zinn und Zink als Hauptlegierungselemente sind seit langem bekannt, doch mußte diesen Lagerwerkstoffen für den Einsatz in hydrodynamischen Lagern für den Antriebsstrang von Verbrennungskraftmaschinen zur Verbesserung der tribologischen Eigenschaften ein vergleichsweise hoher Anteil an Blei zulegiert werden. Trotzdem konnten Lager mit diesen bekannten Gleitlagerwerkstoffen den gestellten Anforderungen nur genügen, wenn die auf eine stählerne Stützschale aufgebrachte Lagermetallschicht mit einer Laufschicht abgedeckt wurde, die besondere Gleiteigenschaften aufwies, weil der hohe Bleigehalt zwar eine ausreichende Sicherheit gegenüber der Freßneigung sicherstellt, nicht aber die erforderliche Gleitfähigkeit.

Die Toxizität von Bleibronzen steht dem Einsatz solcher Lagerwerkstoffe aber zunehmend entgegen. Der Versuch, Bleibronzen durch bleifreie Gleitlagerwerkstoffe auf Kupferbasis mit Zinn und Zink als Hauptlegierungselemente zu ersetzen, war stets mit einer beeinträchtigten tribologischen Eignung der Ersatzlagerwerkstoffe verbunden. So wurde beispielsweise vorgeschlagen (DE 103 08 779 B3), die Gleiteigenschaften einer Messinglegierung, die wenigstens 21,3 Gew.% Zink und höchstens 3,5 Gew.% Zinn aufweist, durch Zusätze von Magnesium, Eisen oder Kobalt, Nickel und Mangan oder Silicium zu verbessern, allerdings ohne durchschlagenden Erfolg. Bei einer anderen bekannten bleifreien Kupferlegierung mit wenigstens 8,5 Gew.% Zink und 1 bis 5 Gew.% Silicium als Hauptlegierungsbestandteile (DE 103 08 778 B3) sowie mit höchstens 2 Gew.% Zinn und geringfügigen Anteilen an Eisen oder Kobalt, Nickel und Mangan ergeben sich ähnlich unzureichende Gleiteigenschaften. Wird schließlich bei einer Kupferlegierung beispielsweise mit einem Zinngehalt bis 6 Gew.% der Bleizusatz durch die Beigabe von Wismut in einer Größenordnung von 0,5 bis 2 Gew.% vermieden (EP 0 457 478 B1), so können zwar die tribologischen Eigenschaften verbessert werden, doch sinken zugleich die mechanischen Festigkeitskennwerte ab, was diese Lagerwerkstoffe für den Einsatz in Lagern für den Antriebsstrang von Hochleistungs-Verbrennungskraftmaschinen ungeeignet macht. Bislang konnten daher nur Lagerwerkstoffe auf der Basis hochbleihaltiger Bronzen die Lageranforderungen erfüllen. Die steigenden Zünddrücke moderner Verbrennungskraftmaschinen zeigen allerdings, daß auch solche Bleibronzen wegen des Bleianteils an ihre mechanische Belastungsgrenzen stoßen. Dazu kommt, daß eine ausreichende Korrosionsbeständigkeit gegenüber aggressiven Schmiermitteln sichergestellt und eine gute Kaltverformbarkeit berücksichtigt werden müssen, so daß selbst Bleibronzen den steigenden Anforderungen an die Belastbarkeit der Lagerwerkstoffe nicht mehr genügen können.

Ein weiteres lager wird in dem Dokument EP 1 698 707 A2 beschrieben, welches stand der Technik nach Artikel 54(3) EPü darstellt.

### Darstellung der Erfindung

Der Erfindung liegt somit die Aufgabe zugrunde, ein Gleitlager der eingangs geschilderten Art mit einer bleifreien Lagermetallschicht auf Kupferbasis zu schaffen, das eine gute Korrosionsbeständigkeit, eine große Festigkeit bei gleichzeitiger hoher Zähigkeit und ein verbessertes Verhalten gegenüber Schmierstoffverschmutzungen und Festfressen zeigt.

Die Erfindung löst die gestellte Aufgabe dadurch, daß die Lagermetallschicht einen Zinnanteil von 2,5 bis 11 Gew.%, einen Zinkanteil von 0,5 bis 5 Gew.%, einen Anteil an Zirkon und Titan von zusammen mindestens 0,01 Gew.%, einen Anteil an Phosphor von mindestens 0,03 Gew.% und einen Wismutanteil bis höchstens 2 Gew.% aufweist, wobei die Summe der Anteile an Zirkon, Titan und Phosphor höchstens 0,25 Gew.% ausmacht und die Summe der Zinn- und Zinkanteile zwischen 3 und 13 Gew.% liegt.

Es hat sich in überraschender Weise herausgestellt, daß durch die vorgeschlagene Zusammensetzung die Freßneigung der Lagermetallschicht in einem entscheidenden Ausmaß verbessert werden konnte. Es wird davon ausgegangen daß die geringere Freßneigung auf eine vorwiegend aus Alpha-Bronze bestehende Matrix und die Anwesenheit von an den Korngrenzen feinst verteilten Alpha-Delta-Eutektoiden zurückzuführen ist, wobei Titan und Zirkon einen bedeutenden Einfluß auf die Feinheit der Alpha-Delta-Eutektoiden haben, jedoch nur dann, wenn die Elemente Titan und Zirkon durch Beimengungen von Phosphor vor einer vorzeitigen Oxidation geschützt werden. Eine merkliche Verbesserung des Freßverhaltens der Lagermetallschicht kann bereits bei einem Anteil an Zirkon und Titan von zusammen 0,01 Gew.% erzielt werden. Voraussetzung hiefür ist ein entsprechender Schutz vor einer Oxidation, der einen Mindestanteil an Phosphor von 0,03 Gew.% bedingt. Werden zu hohe Anteile an Zirkon und Titan gewählt, so wirken sich diese Elemente versprödend auf die Matrix aus, was die Verformbarkeit der Lagermetallschicht unzulässig einschränkt. Übermäßige Phosphoranteile sind ebenfalls zu vermeiden, um die Duktilität und Ermüdungsfestigkeit des Lagerwerkstoffes nicht zu gefährden. Bei einer Summe der Anteile an Zirkon, Titan und Phosphor von höchstens 0,25 Gew.% kann eine den Anforderungen entsprechende Duktilität gewährleistet werden. Der Phosphoranteil kann dabei vorteilhaft mit 0,08 Gew.% nach oben begrenzt werden.

Mit den angegebenen Anteilsbereichen von Zinn und Zink können die Anforderungen an die Gleiteigenschaft der Lagermetallschicht und an die mechanische Belastbarkeit des Lagers gut erfüllt werden. Bei einer Beschränkung des Zinnanteils auf höchstens 11 Gew.% treten noch keine unzulässigen Aushärtungseffekte auf. Außerdem sind noch keine zu einer Versprödung führende Phasenzusammensetzungen zu erwarten. Das Zink stellt einen geeigneten Ersatz für sonst zum Einsatz kommende höhere Phosphoranteile dar, die sich aufgrund der Ausbildung intermetallischer Eisen-Phosphorverbindungen nachteilig auf den Verbund der Lagermetallschicht mit der stählernen Stützschale auswirken können. Die Legierung der Lagermetallschicht kann sowohl gieß- als auch sintertechnisch gut beherrscht werden, so daß sie sich vorteilhaft für die Gieß- oder Sinterplattierung auf Stahl eignet.

Die Zugabe von Zink verbessert außerdem den Schutz vor Oxidation in der flüssigen Phase der Legierungsgestehung und unterstützt die Ausbildung der tribologisch günstigen Alpha-Delta-Eutektoiden. Um die Vorteile des Zinks in der Lagermetallschicht zu nützen, ist ein Mindestgehalt von 0,5 Gew.% erforderlich. Der Zinkanteil darf allerdings 5 Gew.% nicht übersteigen, damit die Korrosionsbeständigkeit nicht gefährdet wird.

Die Freßneigung wird durch einen Wismutanteil bis höchstens 2 Gew.% zusätzlich herabgesetzt. Bei einem Wismutanteil unter 2 Gew.% können die geforderten Festigkeitswerte gehalten werden. Höhere Wismutanteile führen aber zu einer Schwächung der Matrix. Der durch Wismut bedingte geringere Korrosionswiderstand führt dann auch dazu, daß Korrosionsangriffe in tiefer liegenden Matrixbereichen wirksam werden können.

Wegen der an sich bekannten Auswirkungen von Nickel, Mangan, Aluminium, Silber, Eisen, Arsen, Antimon, Magnesium und Kobalt auf die Festigkeit, die Warmfestigkeit und die Korrosionsbeständigkeit kann die Lagermetallschicht wenigstens eines dieser Elemente aufweisen, wobei der Einzelanteil dieser Elemente höchstens 2,5 Gew.% und der Summenanteil der eingesetzten Elemente dieser Gruppe höchstens 11 Gew.%, vorzugsweise höchstens 9,5 Gew.%, betragen sollen, weil sonst die geforderten Eigenschaften der Lagermetallschicht nicht erreicht werden können. In diesem Zusammenhang ist zu bedenken, daß die Löslichkeit dieser Elemente beispielsweise durch einen zu hohen Zinkanteil nicht behindert werden darf, um die Ausbildung der Matrix in Form einer Alpha-Bronze nicht zu beeinträchtigen. Besonders günstige Verhältnisse ergeben sich im allgemeinen, wenn der Einzelanteil der eingesetzten Elemente der Elementengruppe höchstens 0,5 Gew.%, vorzugsweise höchstens 0,05 Gew.%, ausmacht.

### Weg zur Ausführung der Erfindung

Zur Bestimmung des Freßwiderstandes wurde ein Probelager mit einem Durchmesser von 48,0 mm, einer Breite von 21,0 mm und einem Lagerspiel von 1,4 ‰ bei einer Umdrehungszahl von 5000 U/min und einer Ölrate von 1,1 I/min bei einem Druck von 0,7 bar und einer Ölzulauftemperatur von 120 °C mit einer statischen Last beaufschlagt, die alle 1,75 min stufenweise bis zum Fressen erhöht und die Verreiblast gemessen wurde. Während bei bekannten bleifreien Lagermetallegierungen auf Kupferbasis mit Zinn als Hauptlegierungselement höchstens einer der erforderlichen Mindestwerte für den durchschnittlichen Freßwiderstand von beispielsweise 20 MPa für die Verreiblast und für die Ermüdungsfestigkeit von z. B. 150 MPa bei 2.10⁶ Lastwechseln erreichen, können diese Mindestwerte mit erfindungsgemäßen Gleitlagern ohne weiteres sichergestellt werden. So konnten bei Lagermetallegierung auf Kupferbasis mit 3 Gew.% Zinn, 1 Gew.% Zink und einem Summenanteil an Zirkon, Titan und Phosphor von 0,08 Gew.% bei einem Nickelanteil von 1 Gew.% und einem A-luminiumanteil von 0,3 Gew.% eine Verreiblast von 24 MPa und eine Biegewechselfestigkeit von 152 MPa gemessen werden. Wurde der Zinnanteil auf 4 Gew.% und der Summenanteil an Zirkon, Titan und Phosphor auf 0,09 Gew.% erhöht, so betrug die Verreiblast 24 MPa und die Biegewechselfestigkeit 154 MPa ohne eine Zulegierung von Nickel und Aluminium. Bei einer zusätzlichen Steigerung des Summenanteils an Zirkon, Titan und Phosphor auf 0,12 Gew.% und einer Zulegierung von 0,05 Gew.% Kobalt und 0,05 Gew.% Magnesium konnten die Verreiblast auf 28 MPa und die Biegewechselfestigkeit auf 164 MPa gesteigert werden. Bei einer Lagermetallschicht auf Kupferbasis mit 4 Gew.% Zinn, 1 Gew.% Zink und einem Summenanteil an Zirkon, Titan und Phosphor von 0,11 Gew.% wurden bei einem Aufbringen auf die stählerne Stützschale durch ein Walzplattieren eine Verreiblast von 26 MPa und eine Biegewechselfestigkeit von 163 MPa festgestellt. Mit der gleichen, aber aufgegossenen Lagermetallegierung konnten eine Reiblast von 24 MPa und eine Biegewechselfestigkeit von 156 MPa erreicht werden. Mit einer zusätzlichen Erhöhung des Zinnanteils steigen auch die Werte für die Verreiblast und die Biegewechselfestigkeit. Mit einem Zinnanteil von 5 Gew.% wurden mit einem unveränderten Zinkanteil von 1 Gew.% und einem Summenanteil an Zirkon, Titan und Phosphor von 0,10 Gew.% bei einem zusätzlichen Anteil an Eisen von 0,2 Gew.% und an Mangan von 0,1 Gew.% eine Verreiblast von 34 MPa und eine Biegewechselfestigkeit von 168 MPa erzielt. Ohne diese Zusatzelemente Eisen und Mangan betrugen die Verreiblast 35 MPa und die Biegewechselfestigkeit 163 MPa. Eine weitere Steigerung des Zinnanteils auf 8 Gew.% und des Summenanteils an Zirkon, Titan und Phosphor auf 0,17 Gew.% ergab bei einem gleichbleibenden Zinkanteil und einem zusätzlichen Anteil von 0,2 Gew.% Mangan, 0,1 Gew.% Kobalt und 1 Gew.% Nickel eine Verreiblast von 37 MPa und eine Biegewechselfestigkeit von 173 MPa.

## Patentansprüche

1. Gleitlager mit einer stählernen Stützschale und mit einer auf die Stützschale aufgebrachten, bleifreien Lagermetallschicht auf Kupferbasis mit den Hauptlegierungselementen Zinn und Zink, **dadurch gekennzeichnet, daß** die Lagermetallschicht einen Zinnanteil von 2,5 bis 11 Gew.%, einen Zinkanteil von 0,5 bis 5 Gew.%, einen Anteil an Zirkon und Titan von zusammen mindestens 0,01 Gew.%, einen Anteil an Phosphor von mindestens 0,03 Gew.% und einen Wismutanteil bis höchstens 2 Gew.% aufweist, wobei die Summe der Anteile an Zirkon, Titan und Phosphor höchstens 0,25 Gew.% ausmacht und die Summe der Zinn- und Zinkanteile zwischen 3 und 13 Gew.% liegt.

2. Gleitlager nach Anspruch 1, **dadurch gekennzeichnet, daß** der Phosphoranteil mit 0,08 Gew.% nach oben begrenzt ist.

3. Gleitlager nach Anspruch 1 oder 2, **dadurch gekennzeichnet, daß** die Lagermetallschicht wenigstens ein zusätzliches Element aus einer Nickel, Mangan, Aluminium, Silber, Eisen, Arsen, Antimon, Magnesium und Kobalt umfassenden Elementengruppe aufweist, wobei der Einzelanteil dieser Elemente höchstens 2,5 Gew.% und der Summenanteil der eingesetzten Elemente dieser Gruppe höchstens 11 Gew.%, vorzugsweise höchstens 9,5 Gew.%, betragen.

4. Gleitlager nach Anspruch 3, **dadurch gekennzeichnet, daß** der Einzelanteil der eingesetzten Elemente der Elementengruppe höchstens 0,5 Gew.%, vorzugsweise höchstens 0,05 Gew.%, beträgt.

## Claims

1. Sliding bearing having a steel support shell and having a lead-free, copper-based bearing metal layer mounted on the support shell and containing the main alloy elements tin and zinc, **characterised in that** the bearing metal layer comprises a tin content of 2.5 to 11 wt.%, a zinc content of 0.5 to 5 wt.%, a content of zirconium and titanium of together at least 0.01 wt.%, a content of phosphorus of at least 0.03 wt.% and a bismuth content of at most 2 wt.%, wherein the sum of the contents of zirconium, titanium and phosphorus is at most 0.25 wt.% and the sum of the tin and zinc contents is between 3 and 13 wt.%.

2. Sliding bearing as claimed in Claim 1, **characterised in that** the upper limit of the phosphorus content is 0.08 wt.%.

3. Sliding bearing as claimed in Claim 1 or 2, **characterised in that** the bearing metal layer comprises at least one additional element from an element group including nickel, manganese, aluminium, silver, iron, arsenic, antimony, magnesium and cobalt, wherein the individual content of these elements is at most 2.5 wt.% and the sum content of the elements used of this group is at most 11 wt.%, preferably at most 9.5 wt.%.

4. Sliding bearing as claimed in Claim 3, **characterised in that** the individual content of the elements used of the element group is at most 0.5 wt.%, preferably at most 0.05 wt.%.

## Revendications

1. Palier coulissant avec un coussinet en acier et une couche support métallique, exempte de plomb, appliquée sur le coussinet, à base de cuivre avec comme éléments d'alliage principaux l'étain et le zinc, **caractérisé en ce que** la couche support métallique présente une part en étain de 2,5 % à 11 % en poids, une part en zinc de 0,5 % à 5 % en poids, une part en zirconium et titane globalement d'au moins 0,01 % en poids, une part en phosphore d'au moins 0,03 % en poids et une part en bismuth de 2 % au maximum en poids, la somme des parts en zirconium, titane et phosphore constituant au plus 0,25 % en poids et la somme des parts en étain et zinc étant comprise entre 3 et 13 % en poids.

2. Palier coulissant selon la revendication 1, **caractérisé en ce que** la part maximale en phosphore est limitée à 0,08 % en poids.

3. Palier coulissant selon la revendication 1 ou 2, **caractérisé en ce que** la couche support métallique présente au moins un élément supplémentaire issu d'un groupe d'éléments comprenant du nickel, manganèse, aluminium, argent, fer, arsenic, antimoine, magnésium et cobalt, la part individuelle de ces éléments étant au maximum de 2,5 % en poids et la part des sommes des éléments utilisés de ce groupe étant au plus 11 % en poids, de préférence au plus 9,5 % en poids.

4. Palier coulissant selon la revendication 3, **caractérisé en ce que** la part individuelle des éléments utilisés du groupe d'éléments est au plus de 0,5 % en poids, de préférence 0,05 % au maximum en poids.
